Europäisches Patentamt

European Patent Office

Office européen des brevets

(19)

(11) **EP 0 614 584 B1**

(12) **EUROPÄISCHE PATENTSCHRIFT**

(45) Veröffentlichungstag und Bekanntmachung des Hinweises auf die Patenterteilung:
**29.01.1997 Patentblatt 1997/05**

(21) Anmeldenummer: **92923781.6**

(22) Anmeldetag: **24.11.1992**

(51) Int Cl.6: **H04H 1/00**, H04L 5/06, H04H 3/00

(86) Internationale Anmeldenummer:
**PCT/EP92/02703**

(87) Internationale Veröffentlichungsnummer:
**WO 93/11616 (10.06.1993 Gazette 1993/14)**

(54) **VERFAHREN ZUR DIGITALEN DATENÜBERTRAGUNG IM NULLSYMBOL DES COFDM-MODULATIONSVERFAHRENS**

DIGITAL DATA TRANSMISSION PROCESS IN THE NULL SYMBOL OF A COFDM MODULATION PROCESS

PROCEDE DE TRANSMISSION NUMERIQUE DE DONNEES DANS LE SYMBOLE NUL D'UN PROCEDE DE MODULATION PAR MULTIPLEXAGE PAR REPARTITION ORTHOGONALE DE LA FREQUENCE CODEE

(84) Benannte Vertragsstaaten:
**DE ES FR GB IT SE**

(30) Priorität: **26.11.1991 DE 4138770**

(43) Veröffentlichungstag der Anmeldung:
**14.09.1994 Patentblatt 1994/37**

(73) Patentinhaber: **TELEFUNKEN Sendertechnik GmbH**
**10553 Berlin (DE)**

(72) Erfinder: **MÜLLER, Andreas**
**D-7900 Ulm (DE)**

(74) Vertreter: **Weber, Gerhard, Dipl.-Phys. et al**
**AEG Aktiengesellschaft**
**60591 Frankurt (DE)**

(56) Entgegenhaltungen:
**EP-A- 0 205 200        EP-A- 0 369 917**
**DE-A- 3 401 728**

- **IEEE TRANSACTIONS ON CONSUMER ELECTRONICS Bd. 35, Nr. 3, August 1989, NEW YORK US Seiten 493 - 503 B. LE FOCH ET AL. 'DIGITAL SOUND BROADCASTING TO MOBILE RECEIVERS'**
- **EBU REVIEW- TECHNICAL. Nr. 224, August 1987, BRUSSELS BE Seiten 168 - 190 M. ALARD UND R. LASSALLE 'PRINCIPLES OF MODULATION AND CHANNEL CODING FOR DIGITAL BROADCASTING FOR MOBILE RECEIVERS'**

**Beschreibung**

Die Erfindung betrifft ein Verfahren zur digitalen Datenübertragung nach dem Oberbegriff des Patentanspruchs 1.

Das erfindungsgemäße Verfahren findet Verwendung bei dem im digitalen Rundfunk vorgesehenen COFDM (Coded Orthogonal Frequency Division Multiplex) Modulationsverfahren, z.B. ist es im Zusammenhang mit der Senderidentifikation im Gleichwellen-Netz anwendbar.

Ein Gleichwellen-Netz ist dadurch gekennzeichnet, daß mehrere Sender das gleiche Signal auf der gleichen Frequenz zur gleichen Zeit abstrahlen. Das COFDM Modulationsverfahren besitzt hohe Immunität gegen Mehrwege-Störungen und ist daher prinzipiell für Gleichwellen-Netze geeignet.

Das digitale Rundfunksignal soll u.a. die Identifikation des Senders enthalten, was dem Empfänger z.B. erlaubt, anhand der empfangbaren Sender seine ungefähre Position zu bestimmen und diese Information dann z.B. zur Selektion der interessanten Verkehrsinformation zu verwenden. Die Identifikation des Senders kann jedoch nur über das von ihm abgestrahlte Signal erfolgen. Im Gleichwellen-Netz ist dies deshalb problematisch, weil alle Sender des Netzes das gleiche Multiplexsignal abstrahlen. Die Signalisierung der Senderkennung muß deshalb außerhalb des eigentlichen Multiplexsignals erfolgen.

COFDM ist ein digitales Mehrkanal-Modulationsverfahren. Bei einem derartigen Verfahren wird das zu übertragene Datensignal auf eine Anzahl N (z.B. mehrere 100) Subkanäle aufgeteilt, die im Frequenzbereich dicht nebeneinander liegen, wobei die Spektren sich definiert überlappen. Durch diese Aufteilung beträgt die in jedem Subkanal übertragene Datenrate nur einen Bruchteil der ursprünglichen. Im gleichen Verhältnis verlängert sich die Symboldauer, was sich vorteilhaft auswirkt, wenn auf dem Übertragungsweg Echos auftreten. Durch Wahl eines genügend großen N kann stets erreicht werden, daß die Symboldauer groß gegen die maximale Echolaufzeit ist. Damit wird die durch Echos verursachte Symbolinterferenz soweit reduziert, daß das Signal ohne Entzerrung demoduliert werden kann.

Das COFDM-Sendesignal $s(t)$ läßt sich im Basisband als Superposition zeit- und frequenzverschobener Basisimpulse $b(t)$ darstellen:

$$s(t) = \sum_i \sum_k s_{i,k} b(t - iT_s) e^{j2\pi kF_s(t - iT_s)}$$

Hierbei ist der Basisimpuls durch

$$b(t) = \begin{cases} 1 & \text{für } -t_g < t < t_s \\ 0 & \text{sonst} \end{cases}$$

gegeben. $j = \sqrt{-1}$ ist die imaginäre Einheit.

Der Summationsindex i repräsentiert den Symboltakt, der Index k den Subkanal. Folgende Parameter beschreiben das COFDM-Modulationsverfahren:

$T_s$:      Symboldauer
$t_s$:      genutzte Symboldauer
$t_g$:      Schutz zeit
$F_s$:      Subkanalabstand

Sie hängen über die Beziehungen $T_s = t_s + t_g$ und $F_s = 1/t_s$ zusammen. Als weitere Kenngröße kann der Nutzanteil, der Quotient aus genutzter Symboldauer und Symboldauer, $\gamma = t_s/T_s$ definiert werden. Bei den derzeit für den Einsatz im digitalen Rundfunk diskutierten Varianten von COFDM ist stets $\gamma = 0.8$. Unter Berücksichtigung dieser Beziehungen besitzt das COFDM-System nur noch einen freien Parameter, aus dem sich die restlichen ableiten lassen.

Die zu übertragenden Daten sind in komplexen Symbolen $d_{i,k}$ kodiert. Bei COFDM wird 4-Phasen-Umtastung als Modulationsverfahren verwendet, es gilt daher $d_{i,k} \in \{1, j, -1, -j\}$. Damit die Übertragung unempfindlich gegen kanalbedingte Phasendrehungen ist, werden nicht die $d_{i,k}$, sondern die durch die differentielle Kodierung $s_{i,k} = s_{i-1,k} d_{i,k}$ erzeugten Sendesymbole $s_{i,k}$ ausgesendet. Mitunter ist es praktisch, die im gleichen Zeitschlitz i übertragenen Sendesymbole aller Subkanäle zu einem N-dimensionalen Vektor $s_i$ zusammenzufassen. Ein solcher Vektor wird Symbolblock genannt.

Die Erzeugung des COFDM-Sendesignals erfolgt z.B. digital mit Hilfe der inversen schnellen Fourier-Transformation (IFFT). Das Blockschaltbild eines COFDM-Senders ist in FIG. la dargestellt. Für jeden Zeitschlitz i wird eine IFFT berechnet. Ihr Ausgangssignal hat die Dauer $t_s$. Es wird periodisch auf ein Signal der Dauer $T_s$ fortgesetzt.

Der COFDM-Demodulator dient zur Wiedergewinnung der informationstragenden Symbole $d_{i,k}$. Hierzu werden aus dem Empfänger-Eingangssignal r(t) die Größen

$$r_{i,k} = \frac{1}{t_s} \int_0^{t_s} x(t + iT_s)\, e^{-j2\pi\, kF_s t} dt$$

gebildet, aus denen Schätzwerte $\hat{d}_{i,k}$ für die Datensymbole durch differentielle Demodulation $\hat{d}_{i,k} = r_{i^*,k}\, r_{i-1,k}$ gewonnen werden. Dabei ist r* konjugiert komplex zu r.

In der einschlägigen Literatur sind Vorschläge bekannt zur Synchronisation von rahmenbildenden digitalen Datenübertragungssystemen.

Sie benutzen zum Teil Rahmensynchronisationsworte, die gleichzeitig zur Übermittlung von Informationen verwendet werden können. In der OS DE-3401728-A1 wird ein solches System ausführlich dargestellt. Diese Systeme weisen den Nachteil auf, daß sie eine aufwendige und teure Apparatur zur Erkennung der Rahmenworte benötigen. Zudem weisen sie den Nachteil auf, sehr empfindlich gegen Frequenzfehler zu sein, ein Nachteil, der sich insbesondere in Kombination mit digitalen Multiplexsignalen auswirkt.

Desweiteren sind Systeme bekannt, die eine Abstrahlungspause des Senders (Nullsymbole) zur Synchronisation der Rahmen verwenden. Diesen Nullsymbolen können zusätzliche Informationswörter angehängt sein, die aber noch nicht zum eigentlichen Multiplexsignal gehören. Auch finden sich Systeme, die das Synchronisationssignal gleichzeitig zur Rauschentkopplung der Multiplexsignale einsetzen. In OS EP-A2-0369917 befindet sich die Beschreibung eines solchen Systems, das sich eines abstrahlungsfreien Intervalls des Senders bedient um die Rahmensynchronisation durchzuführen.

Auch der COFDM-Demodulator ist digital mit Hilfe der schnellen Fourier-Transformation (FFT) realisierbar. Er ist in Fig. lb dargestellt. Für jeden Zeitschlitz wird ein Abschnitt der Dauer $t_s$ des Empfangssignals ausgewertet. Ein Abschnitt der Dauer $t_g$ bleibt unausgewertet. In diesen Abschnitt fallen die Echos des Signals aus dem vorangegangenen Zeitschlitz.

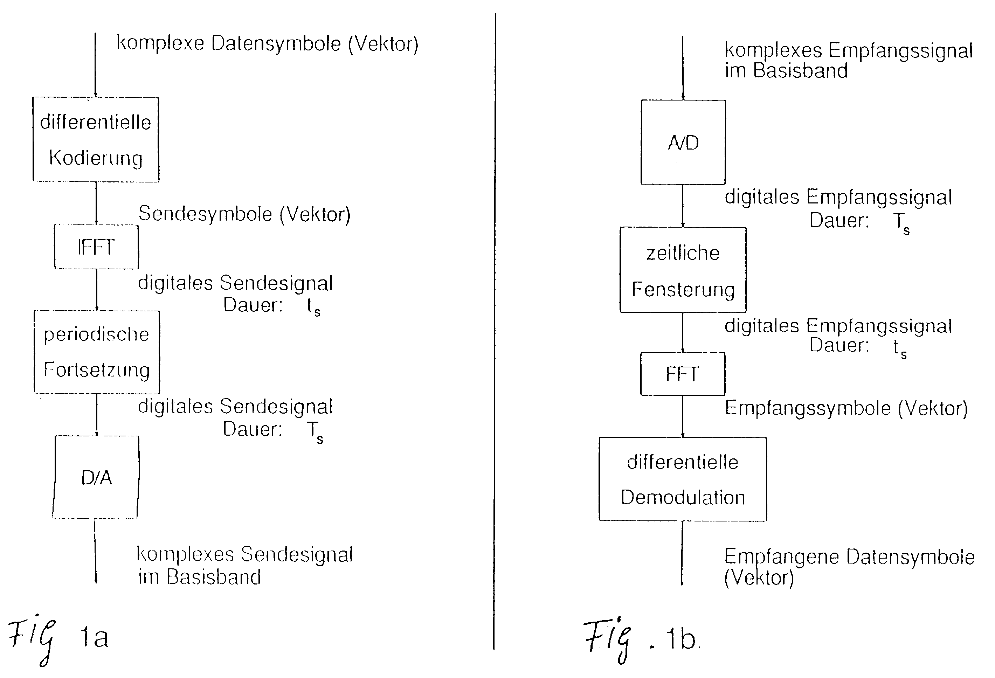

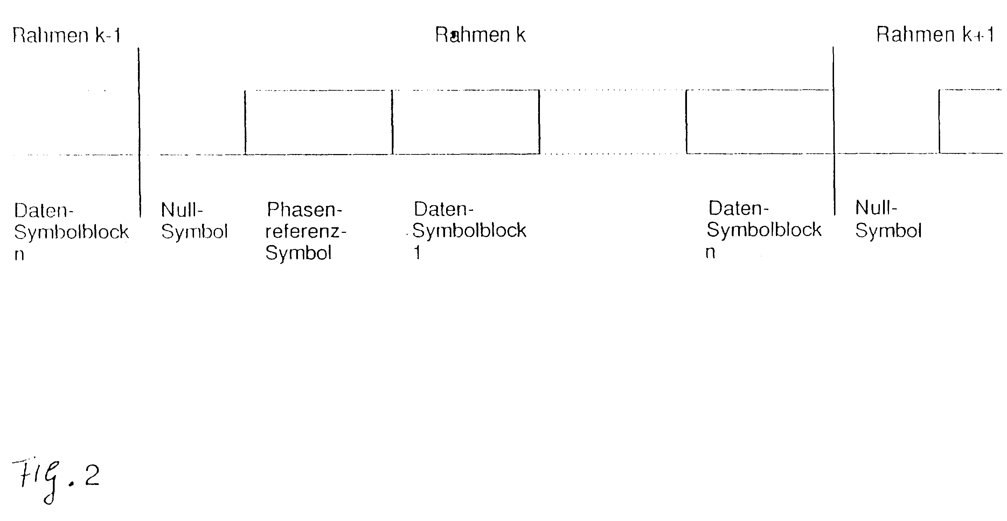

Die Datenübertragung beim COFDM-System ist rahmenorientiert. Ein Rahmen ist eine strukturierte Anordnung zeitlich aufeinander folgender Symbolblöcke. Er besitzt folgende, in Fig. 2 dargestellte Struktur:

- Der erste Symbolblock $s_1$ im Rahmen ist das Nullsymbol. Es ist dadurch gekennzeichnet, daß kein Sendesignal abgestrahlt wird. Der Empfänger kann mit einem Hüllkurvendetektor den Feldstärkeeinbruch detektieren. Der Abstand zwischen den Nullsymbolen des n-ten und des (n+1)-ten Rahmens dient zur Rahmensynchronisation, die Dauer des Nullsymbols zur Symbolsynchronisation. Das Nullsymbol wird nicht mit der FFT verarbeitet. Es besitzt in der Regel eine von $T_s$ abweichende Länge $T_o = 0.8\, T_s$.

- Der zweite Symbolblock $s_2$ im Rahmen ist das Phasenreferenz-Symbol. Es wird u.a. zur Initialisierung des differentiellen Demodulators benötigt.

- Der Rest des Rahmes besteht aus informationstragenden Symbolblöcken.

Der Erfindung liegt die Aufgabe zugrunde ein gattungsgemäßes Verfahren zur digitalen Datenübertragung anzugeben, mit dem außerhalb des eigentlichen digitalen Multiplexsignals weitere digitale Daten unabhängig übertragen werden können.

Diese Aufgabe wird gelöst durch die im kennzeichnenden Teil des Patentanspruchs 1 angegebenen Merkmale. Vorteilhafte Ausgestaltungen und/oder Weiterbildungen sind den Unteransprüchen zu entnehmen.

Das erfindungsgemäße Verfahren zur Datenübertragung nutzt die Tatsache aus, daß im Nullsymbol des COFDM Datenrahmens bislang kein Signal vorhanden ist. Für die Auswertung der Hüllkurve ist dies jedoch nicht unbedingt erforderlich. Es reicht aus, wenn die Signalleistung im Nullsymbol nur genügend klein gegenüber der während des gesamten Restes des Rahmens abgestrahlten Leistung ist. Die zu garantierende Dämpfung der Sendeleistung während des Nullsymbols muß noch festgelegt werden und richtet sich nach der Leistungsfähigkeit der analogen Hüllkurvendetektion.

Während des Nullsymbols wird also ein Signal mit entprechend niedrigem Pegel gesendet. Um dennoch die fehlerfreie Informationsübertragung sicherzustellen sind zusätzliche Kodierungs- und Diversity-Maßnahmen erforderlich

Als Modulationsverfahren für die Datenübertragung im Nullsymbol wird COFDM verwendet, da hierdurch die notwendige Resistenz gegen Mehrwege-Störungen erreicht wird. Außerdem ist es zweckmäßig, für diese Spezialaufgabe das gleiche Modulationsverfahren anzuwenden wie für das eigentliche Multiplexsignal (also COFDM), da dann der im Empfänger vorhandene Demodulator für die Demodulation der im Nullsymbol übertragenen Information mitverwendet werden kann.

Es ist jedoch zu beachten, daß die Dauer $T_o$ des Nullsymbols von der Dauer $T_s$ eines Daten-Symbolblocks verschieden ist. Auch für die Datenübertragung im Nullsymbol ist eine Schutzzeit $t_{go}$ erforderlich. Die kürzestmögliche Länge der Schutzzeit ohne Einfluß auf die Übertragungsqualität wird durch die physikalischen Eigenschaften des Funkkanals bestimmt. Um für das COFDM-System die größtmögliche Spektrumeffizienz zu erzielen, wird die Schutzzeit der normalen Daten-Symbolblöcke $t_g$ möglichst dieses nicht zu unterschreitende Minimum annehmen. Damit muß dann aber $t_{go}$ mindestens so groß sein wie $t_g$.

Die nutzbare Symboldauer im Nullsymbol $t_o$ ergibt sich zu $t_o = T_o - t_{go} \leq T_o - t_g$ also ist $t_o \leq t_s + (T_o-T_s)$. Im Fall, daß das $T_o \geq T_s$ gilt, entstehen keine Probleme, denn dann läßt sich $t_{go}$ so festlegen, daß $t_o = t_s$ ist, die nutzbaren Symboldauern des Nullsymbols und des normalen Daten-Symbolblockes also übereinstimmen. Eine spezielle Aufgabe stellt sich dann, wenn wie in den derzeit vorgesehenen Konfigurationen für den digitalen Rundfunk $T_o < T_s$ gilt, da dann notwendigerweise auf $t_o < t_s$ folgt, also im Nullsymbol nur eine kürzere nutzbare Symboldauer verfügbar ist als im normalen Daten-Symbolblock.

Bei der Beschreibung des COFDM Verfahrens wurde bereits dargestellt, daß der Subkanalabstand gerade der Kehrwert der nutzbaren Symboldauer ist. Diese Festlegung ist für die Orthogonalität der Subkanäle zwingend erforderlich. Ist nun der Fall $t_o < t_s$ gegeben, besitzen die Subkanäle im Nullsymbol einen größeren Frequenzabstand als bei den normalen Daten-Symbolblöcken. Da die Gesamtbandbreite des COFDM Signals über den Rahmen konstant bleibt, kann während des Nullsymbols nur eine geringere Anzahl von Subkanälen aktiv sein.

Beispielsweise ergibt sich für $T_o = 0.8T_s$ und $t_o = 0.5t_s$, daß $t_{go} = 2t_g$ ist. Halbieren der nutzbaren Symboldauer bedeutet nun Verdoppeln des Subkanalabstandes. Um auf die gleiche Bandbreite zu kommen, ist die Anzahl der aktiven Subkanäle gerade zu halbieren. Bei gleichbleibender Abtastrate fallen im Zeitintervall der Länge $t_o$ genau halb soviele Abtastwerte an wie im Zeitintervall $t_s$. Für die Modulation und Demodulation wird vorteilhafterweise eine schnelle Fourier-Transformation (FFT) eingesetzt. Die FFT-Länge für die Modulation bzw. Demodulation des Nullsymbols ist nun gerade halb so groß wie bei den normalen Daten-Symbolblöcken.

Unabhängig von den bereits getroffenen Festlegungen ist das auf den Subkanälen verwendete Modulationsverfahren noch frei wählbar. Die erfindungsgemäße Lösung sieht hierfür differentielle Phasenumtastung vor, was dem für die normale Datenübertragung im COFDM-System verwendeten Modulationsverfahren entspricht. Hierbei werden die Daten auf die Phasendifferenz benachbarter Symbole abgebildet. Bei einem Mehrkanal-Übertragungssystem bestehen nun grundsätzlich die zwei Möglichkeiten, die Phasendifferenz entweder zeitlich benachbarter oder frequenzmäßig benachbarter Symbole als Informationsträger zu verwenden. Beide Arten der differentiellen Modulation lassen sich auch für die Informationsübertragung im Nullsymbol des COFDM Rahmens anwenden.

Bei der differentiellen Modulation in Frequenzrichtung ist ein Subkanal Phasenreferenz für den nächsten. Das hat den Vorteil, daß sowohl senderseitig als auch empfängerseitig nur der Inhalt des Nullsymbols und keine weiteren Symbolblöcke des COFDM Rahmens für die Modulation bzw. Demodulation benötigt werden.

Bei der differentiellen Modulation in Zeitrichtung wird ein dem Nullsymbol zeitlich benachbarter Symbolblock als Phasenreferenz benötigt. Aufgrund der Anordnung im COFDM Rahmen ist dies vorteilhafterweise das Phasenreferenz-Symbol des COFDM Rahmens. Der Nachteil dieses Verfahrens liegt darin, daß jetzt sowohl senderseitig als auch empfängerseitig zur Modulation bzw. Demodulation der im Nullsymbol übertragenen Daten der Bezug zum Phasenreferenz-Symbol hergestellt werden muß. Dieser Nachteil ist jedoch von geringer Bedeutung, da in der Praxis der Empfänger das Phasenreferenz-Symbol ohnehin zur Synchronisation benötigt, also auswerten muß. Die differentielle Modulation in Zeitrichtung bietet den Vorteil der Kompatibilität mit dem bei den Daten-Symbolblöcken verwendeten Verfahren.

Das erfindungsgemäße Verfahren ermöglicht z.B. die Übertragung der Senderkennung, ist aber nicht auf diese Anwendung beschränkt.

**Patentansprüche**

1. Digitales Mehrkanal-Übertragungsverfahren, insbesondere ein COFDM-Verfahren, das rahmenorientiert arbeitet und der Rahmen zumindest ein Nullsymbol enthält, <u>dadurch gekennzeichnet,</u> daß mindestens in einem Nullsymbol Daten übertragen werden.

2. Verfahren nach Anspruch 1, dadurch gekennzeichnet, daß die im Nullsymbol übertragenen Daten mit genügend schwacher Sendeleistung abgestrahlt werden, so daß die Grobsynchronisation des COFDM Empfängers durch die analoge Hüllkurvenauswertung nicht beeinträchtigt wird.

3. Verfahren nach den Ansprüchen 1 und 2, dadurch gekennzeichnet, daß bei der Übertragung der Daten im Nullsymbol das COFDM-Modulationsverfahren verwendet wird.

4. Verfahren nach einem der vorhergehenden Ansprüche, dadurch gekennzeichnet, daß das Nullsymbol mit einer von den Daten-Symbolblöcken abweichenden Symboldauer übertragen wird, und daß bei gleichbleibender Bandbreite der Subkanalabstand im Nullsymbol und damit die Anzahl der Subkanäle im Nullsymbol von der Anzahl der Subkanäle in den Daten-Symbolblöcken abweicht.

5. Verfahren nach Anspruch 4, dadurch gekennzeichnet, daß die Daten des Nullsymbols mit einer Symboldauer von 80% der Daten-Symboldauer übertragen werden, daß die Daten im Nullsymbol mit einer aktiven Symboldauer, die die Hälfte der normalen aktiven Symboldauer beträgt, übertragen werden, daß der Subkanalabstand im Nullsymbol im Vergleich zu dem der normalen Daten-Symbolblöcke verdoppelt wird, und daß die Subkanalanzahl halbiert wird.

6. Verfahren nach Anspruch 5, dadurch gekennzeichnet, daß für die Modulation und Demodulation der Daten-Symbolblöcke eine schnelle diskrete Fourier-Transformation (FFT) berechnet wird, und daß für die Modulation und Demodulation der Daten im Nullsymbol eine FFT berechnet wird, die die halbe Länge der FFT in den Daten-Symbolblöcken besitzt.

7. Verfahren nach einer der vorhergehenden Ansprüche, dadurch gekennzeichnet, daß die Daten auf den einzelnen Subkanälen in der Phasendifferenz benachbarter Subkanäle übertragen werden.

8. Verfahren nach einem der vorhergehenden Ansprüche 1 bis 6, dadurch gekennzeichnet, daß die Daten auf den einzelnen Subkanälen in der Phasendifferenz zwischen dem Subkanal im Nullsymbol und dem entsprechenden Subkanal des nachfolgenden Phasenreferenz-Symbols übertragen werden.

## Claims

1. Digital multichannel transmission method, in particular a COFDM method, which operates in frame-oriented manner and wherein the frame contains at least one zero symbol, characterised thereby, that data are transmitted in at least one zero symbol.

2. Method according to claim 1, characterised thereby, that the data transmitted in the zero symbol are radiated with sufficiently weak transmission power that the coarse synchronisation of the COFDM receiver is not impaired by the analog envelope curve evaluation.

3. Method according to the claims 1 and 2, characterised thereby, that the COFDM modulation method is used for the transmission of the data in the zero symbol.

4. Method according to one of the preceding claims, characterised thereby, that the zero symbol is transmitted with a symbol duration differing from that of the data signal blocks and, for constant bandwidth, the subchannel spacing in the zero symbol and thereby the number of the subchannels in the zero symbol differs from the number of the subchannels in the data signal blocks.

5. Method according to claim 4, characterised thereby, that the data of the zero symbol are transmitted with a symbol duration of 80% of the data symbol duration, that the data in the zero symbol are transmitted with an active symbol duration which amounts to half of the normal active symbol duration, that the subchannel spacing in the zero symbol is doubled by comparison with that of the normal data symbol blocks and that the number of the subchannels is halved.

6. Method according to claim 5, characterised thereby, that a fast discrete Fourier transformation (FFT) is computed for the modulation and demodulation of the data signal blocks and that an FFT, which has half the length of the FFT in the data signal blocks, is computed for the modulation and demodulation of the data in the zero symbol.

7. Method according to one of the preceding claims, characterised thereby, that the data on the individual subchannels are transmitted in the phase difference of adjacent subchannels.

8. Method according to one of the preceding claims 1 to 6, characterised thereby, that the data on the individual subchannels are transmitted in the phase difference between the subchannel of the zero symbol and the corresponding subchannel of the next following phase reference symbol.

**Revendications**

1. Procédé de transmission numérique à plusieurs canaux, en particulier procédé COFDM, opérant par trames, et la trame contenant au moins un symbole zéro, caractérisé en ce que les données sont transmises au moins durant un symbole zéro.

2. Procédé selon la revendication 1, caractérisé en ce que les données transmises durant le symbole zéro sont rayonnées avec une puissance d'émission suffisamment faible, de sorte que la synchronisation grossière du récepteur COFDM n'est pas altérée par l'évaluation de courbe d'enveloppe analogique.

3. Procédé selon les revendications 1 et 2, caractérisé en ce que lors de la transmission des données durant un symbole zéro, est utilisé le procédé de modulation COFDM.

4. Procédé selon l'une quelconque des revendications précédentes, caractérisé en ce que le symbole zéro est transmis avec une durée de symbole s'écartant des blocs de symboles de données, et en ce que pour une largeur de bande demeurant identique, l'écartement des sous-canaux dans le symbole zéro et ainsi le nombre des sous-canaux dans le symbole zéro s'écarte du nombre des sous-canaux dans les blocs de symboles de données.

5. Procédé selon la revendication 4, caractérisé en ce que les données du symboles zéro sont transmises avec une durée de symbole de 80% de la durée de symboles de données, en ce que les données dans le symbole zéro sont transmises avec une durée de symbole active, qui s'élève à la moitié de la durée de symbole active normale, en ce que l'écartement des sous-canaux dans les symboles zéro est doublé comparativement à celui des blocs de symboles de données normaux, et en ce que le nombre des sous-canaux est divisé par deux.

6. Procédé selon la revendication 5, caractérisé en ce que pour la modulation et la démodulation des blocs de symboles de données est calculée une transformation de Fourier discrète rapide (FFT), et en ce que pour la modulation et la démodulation des données durant le symbole zéro est calculée une FFT, qui possède la moitié de la longueur de la FFT dans les blocs de symboles de données.

7. Procédé selon l'une quelconque des revendications précédentes, caractérisé en ce que les données sont transmises sur les différents sous-canaux dans la différence de phase de sous-canaux adjacents.

8. Procédé selon l'une quelconque des revendications précédentes 1 à 6, caractérisé en ce que les données sont transmises sur les différents sous-canaux dans la différence de phase entre le sous-canal dans le symbole zéro et le sous-canal correspondant du symbole de référence de phase suivant.

**Fig. 1b.**

komplexes Empfangssignal im Basisband → A/D → digitales Empfangssignal Dauer: $T_s$ → zeitliche Fensterung → digitales Empfangssignal Dauer: $t_s$ → FFT → Empfangssymbole (Vektor) → differentielle Demodulation → Empfangene Datensymbole (Vektor)

**Fig. 1a**

komplexe Datensymbole (Vektor) → differentielle Kodierung → Sendesymbole (Vektor) → IFFT → digitales Sendesignal Dauer: $t_s$ → periodische Fortsetzung → digitales Sendesignal Dauer: $T_s$ → D/A → komplexes Sendesignal im Basisband

Rahmen k-1                          Rahmen k                                    Rahmen k+1

Daten-          Null-      Phasen-         Daten-              Daten-              Null-
Symbolblock     Symbol     referenz-       Symbolblock         Symbolblock         Symbol
n                          Symbol          1                   n

Fig. 2

EP 0 614 584 B1